# EUROPEAN PATENT SPECIFICATION

(11) **EP 0 908 471 B1**
(45) Date of publication and mention of the grant of the patent: **24.07.2002**
(21) Application number: 98124308.2
(22) Date of filing: 16.10.1991
(51) Int. Cl.: C08F 4/658, C08F 4/646, C08F 10/00

(54) **Olefin polymerization catalyst precursor**
Olefinpolymerisationskatalysatorvorläufer
Précurseur de catalyseur de polymérisation d'oléfines

(30) Priority: 18.10.1990 US 599550; 18.10.1990 US 599538; 18.10.1990 US 599610; 22.10.1990 US 600781; 22.10.1990 US 600898
(43) Date of publication of application: 14.04.1999
(62) Divisional of application: 91309518.8
(73) Proprietor: UNION CARBIDE CHEMICALS & PLASTICS TECHNOLOGY CORPORATION, Danbury, Connecticut 06817-0001 (US)
(72) Inventor: Job, Robert Charles, Houston, Texas, 77077 (US)
(74) Representative: Allard, Susan Joyce

(56) References cited:
- EP-A- 0 268 274
- EP-A- 0 376 188
- DE-A- 3 244 871

## Description

This invention relates to a magnesium-containing, titanium-containing precursor of a catalyst component which can be used to produce a high activity olefin polymerization catalyst.

The production of polymers of α-olefins, particularly ethylene and propylene, has gained commercial acceptance. The products are inexpensive and exhibit a number of commercially useful properties. In the case of the polymerization of ethylene the process is uncomplicated in that the product type is not influenced by the manner in which the ethylene molecules add to the growing polymer chain and the polymeric product does not exist in stereoisomeric forms.

In the case of polymerization of propylene the presence of methyl groups provides the several types of product depending on the steric regularity with which units add to the growing polymeric chain. Most commercial polypropylene is crystalline and results from stereoregular addition of propylene units in a regular head-to-tail manner. Polypropylene in which the units add randomly is termed atactic. This amorphous form is less desirable and often must be removed as by extraction.

Also significant is the activity of the polymerization catalyst. The early trivalent titanium, chromium or vanadium catalysts were of low activity and the product contained a significant proportion of catalyst residues. Removal of such residues was required to obtain commercially satisfactory properties.

The more recent titanium-based polymerization catalysts are stereoregulating and have sufficient activity to avoid extraction and deashing steps. In terms employed conventionally, the high activity catalysts are formed from a solid procatalyst which typically contains magnesium, titanium and halide moieties, a cocatalyst which is usually an organoaluminum compound and a selectivity control agent (SCA). Each of these components influences the catalyst and polymer produced therefrom but the procatalyst seems to have the greatest influence.

US-A-4,330,649 describes a procatalyst obtained by heating a magnesium compound with a higher alcohol and an ester to produce a solution. This solution is added to TiCl₄ and an electron donor (ED) to form the procatalyst. US-A-4,472,521 describes reacting a magnesium alkoxide with a titanium alkoxide in an aromatic hydrocarbon. TiCl₄ and an ED are added to form a solid which is post-treated with transition metal halide. US-A-4,540,679 describes the production of a catalyst component by contacting a suspension of Mg(OC₂H₅)₂ in ethanol with CO₂. The addition of organoaluminum in hydrocarbon produces granular particles employed as support for titanium compound upon contact with TiCl₄. US-A-4728705 describes solubilizing Mg(OC₂H₅)₂ in ethanol with CO₂ and spray drying the resulting solution or using the solution to impregnate carrier particles. Either type of particle is useful in the production of procatalyst of desirable morphology.

A different catalyst is described in US-A-4,710,428, wherein a magnesium compound of the general formula

Mg₄(OR)₆(ROH)₁₀A (I)

is formed wherein R is lower alkyl and A is at least one anion having a total oxidation state of -2. This complex is reacted with tetravalent titanium halide, a halohydrocarbon and an ED to form a procatalyst. The use of the above complexes has advantages in that the complexes are crystals of desirable morphology in contrast to Mg(OC₂H₅)₂ which is not. The crystals can be converted to olefin polymerization catalyst precursors and to catalysts by largely conventional technology. The catalysts are active and produce polymer products of good properties. It would be of advantage to produce improved catalyst precursors and olefin polymerization catalysts whose use results in improved polymer product.

The invention provides complex magnesium-containing, titanium-containing compounds useful as precursors of high activity olefin polymerization catalysts and a process of polymerizing lower α-olefins employing such catalysts. The polyolefins obtained by use of the catalysts have good properties and are obtained in good yield.

Accordingly the invention provides an olefin polymerization procatalyst precursor which contains moieties of magnesium and titanium and which is obtainable by contacting a magnesium alkoxide, a titanium alkoxide and a trialkylborate in an alkanol at an elevated temperature and removing alkanol from the resulting complex alkoxide compound alcoholate.

The procatalyst precursor can then be contacted with a halide of tetravalent titanium halide, an optional halohydrocarbon and an ED to form a solid procatalyst. The procatalyst in turn can then be contacted with an organoaluminum cocatalyst and an SCA to form a high activity olefin polymerization catalyst. The conversion of procatalyst precursor to procatalyst and of procatalyst to catalyst is largely conventional, but the procatalyst precursor can suitably be formed by a number of procedures and takes various forms and compositions depending upon the method of its preparation.

In accordance with the invention a complex alkoxide compound is produced from a magnesium alkoxide, wherein each alkoxide has up to 4 carbon atoms inclusive, a titanium alkoxide, wherein each alkoxide has up to 4 carbon atoms, and a trialkylborate, wherein each alkyl suitably has up to 4 carbon atoms. The reactants are contacted at an elevated temperature and alkanol is removed from the resulting complex alkoxide compound alcoholate. The alkoxide moieties within each reactant can be the same or different and the alkoxide moieties of any one reactant can be the same as or different from the alkoxide moieties of other reactants. Although alkoxide moieties such as methoxide, i-propoxide or i-butoxide are useful, the preferred alkoxide moiety is ethoxide. The stoichiometry of the complex alkoxide compound is of the formula

Mg₃Ti₂(OR)₁₄ (II)

wherein each R independently is alkyl of up to 4 carbon atoms inclusive and is preferably ethyl.

The contacting of the magnesium, titanium and boron compounds takes place in alkanol solution at an elevated temperature and suitably at a pressure sufficient to maintain the reaction mixture in a non-gaseous state. The alkanol preferably, but not necessarily, corresponds to the alkoxide moieties of one or more of the reactants. Suitable reaction temperatures are from 20°C to 180°C, preferably from 50°C to 90°C. Contacting is conducted in a suitable reactor and can be facilitated by conventional methods such as shaking, stirring or refluxing. The initial product, obtained as a crystalline alcoholate upon cooling of the product mixture, is illustrated by the formula

Mg₃Ti₂(OR)₁₄.n(ROH) (IIa)

wherein n is a number from 0 to about 6. This process of producing a complex alkoxide requires a trialkylborate even though boron does not appear in the crystalline product. The trialkylborate suitably is provided in a quantity from about 0.1 to about 2 moles, preferably from 0.5 to 1 mole, per mole of titanium. The magnesium alkoxide suitably is provided in a quantity from about 0.5 mole to about 4 moles, preferably from 0.5 to 2 moles, per mole of titanium.

The resulting complex alkoxide compound (formula IIa) is a solid, crystalline material of low solubility in the medium of its production and can be recovered by well known methods such as filtration or decantation. The alcoholate is converted to the complex alkoxide procatalyst precursor (formula II) by removal of alkanol by conventional procedures generally involving heat. A particularly satisfactory method is by azeotropic distillation with a hydrocarbon or halohydrocarbon solvent. Such solvents in which the complex alkoxide of formula II is soluble and with which the alkanol forms an azeotrope are useful. An illustrative hydrocarbon is isooctane and an illustrative halohydrocarbon is chlorobenzene. The azeotropic solvent is added in a quantity in excess of the alkanol present and the resulting mixture is heated to remove the alkanol azeotropically. The complex alkoxide procatalyst precursor (formula II) which results forms a clear solution is excess azeotropic solvent at the boiling point of the azeotrope as well as upon cooling to ambient temperature. The solution can serve as procatalyst precursor and can be converted to a procatalyst as described below.

The olefin polymerization procatalyst precursor can be converted to a procatalyst by contact with a halide of tetravalent titanium, optionally with halohydrocarbon, and an ED. The halide of tetravalent titanium can be an aryloxy- or an alkoxy- di- or trihalide such as diethoxytitanium dichloride, dihexyloxytitanium dibromide, isopropyloxytitanium trichloride, or phenoxytitanium tribromide, or can be a titanium tetrahalide such as TiCl₄ or TiBr₄. A titanium tetrahalide is preferred, particularly TiCl₄.

The halohydrocarbon optionally employed in the production of procatalyst suitably has up to 12 carbon atoms, preferably up to 9 carbon atoms, and contains at least one halogen atom or in the case of aliphatic halohydrocarbons contains at least two halogens. Exemplary aliphatic halohydrocarbons include CH₂Cl₂, CH₂Br₂, CHCl₃, CCl₄, 1,2-dibromoethane, 1,1,3-trichloropropane, 1,1,2-trichloroethane, trichlorocyclohexane, dichlorofluoromethane and trichloroisooctane. Aromatic halohydrocarbons suitably employed include chlorobenzene, bromobenzene, dichlorobenzene and chlorotoluene. Of the aliphatic halohydrocarbons CCl₄ and 1,1,2-trichloroethane are preferred, but particularly preferred is chlorobenzene.

The electron donor employed in the procatalyst is an ED conventionally used in titanium-based olefin polymerization procatalyst. The ED can be free from active hydrogens. Examples of suitable electron donors include ethers, esters, ketones, amines, imines, amides, nitriles, phosphines, stibines, arsines and alcoholates. A preferred ED is an ester, particularly an alkyl ester of an aromatic monocarboxylic or dicarboxylic acid. Preferred ED's are ethyl benzoate, ethyl p-ethylbenzoate and diisobutyl phthalate. The ED can be a mixture of compounds but preferably is a single compound. Ethyl benzoate and diisobutyl phthalate are preferred.

The manner in which the procatalyst precursor, halide of tetravalent titanium, the halohydrocarbon when employed and the ED are contacted is material but not critical. Best results are obtained when the ED is added to the procatalyst precursor and the resulting mixture is added to at least a portion of the halide of tetravalent titanium. Alternatively, the halide of tetravalent titanium is added to a mixture of the procatalyst precursor and the ED. Other modifications are suitable but less preferred. The resulting solid is typically washed with a 50/50 mixture by volume of additional halide of tetravalent titanium and halohydrocarbon at least once and often twice or more times. This washing process, often termed a halogenation, is frequently aided by the additional presence of an acid halide, particularly an aromatic acid halide such as benzoyl chloride or phthaloyl chloride. Subsequent to contacting with a halide of tetravalent titanium and halohydrocarbon, the resulting solid procatalyst can be washed with a light hydrocarbon to remove unreacted titanium compounds.

In the preferred modification, the initial contacting of ED and procatalyst precursor is conducted at a temperature from ambient temperature to 150°C. Preferably, the materials are mixed at ambient temperature. Sufficient halide of tetravalent titanium and any acid halide are used to convert a substantial portion of the anion moieties of the procatalyst precursor to halide moieties. Sufficient ED is used so that the molar ratio of ED to Mg present in the procatalyst precursor is from 0.01:1 to 10:1, preferably from 0.06:1 to 0.4:1. The final washing produces procatalyst which is stable upon drying in the absence of O₂ and active hydrogen compounds or useful without drying in the formation of an olefin polymerization catalyst by reaction with a cocatalyst and SCA.

The cocatalyst is an organoaluminum compound of the type normally employed with titanium-based procatalysts in the production of high-activity olefin polymerization catalysts. Suitable organoaluminum compounds are alkylaluminum compounds such as trialkylaluminum compounds, alkylaluminum halide compounds and alkylaluminum alkoxide compounds wherein each alkyl independently has 2 to 6 carbon atoms. The preferred alkylaluminum compounds are free of halide moieties and particularly preferred are trialkylaluminum compounds such as triethylaluminum, triisobutylaluminum and diethylhexylaluminum. Triethylaluminum is especially preferred. The organoaluminum compound is suitably employed in sufficient quantity to provide from 1 mole to 150 moles of aluminum per mole of titanium in the procatalyst, preferably from 10 moles to 100 moles of aluminum per mole of titanium.

The SCA employed in catalyst production can be any conventionally utilized in olefin polymerization catalysts based on titanium. A suitable SCA is an ED such as those above for use in procatalyst production but may also be an organosilane of the formula R'_{q}Si(OR)_{4-q} wherein R' is alkyl or aryl of up to 10 carbon atoms, R has the previously stated meaning and q is 1 or 2. A preferred SCA is an ester of an aromatic acid, e.g. ethyl p-ethylbenzoate, diisobutyl phthalate, or ethyl p-methylbenzoate, or an alkylalkoxysilane such as diisobutyldimethoxysilane, isopropyltrimethoxysilane or cyclohexylmethyldimethoxysilane. The SCA is suitably provided to give from 0.01 mole to 100 moles of SCA per mole of titanium in the procatalyst, preferably from 0.5 mole to 20 moles per mole of titanium.

The components of the olefin polymerization catalyst are contacted by largely conventional methods. In one modification, the components are contacted outside the polymerization zone as by mixing the components and introducing the preformed catalyst into the polymerization reactor. In an alternative modification, the catalyst components are introduced separately into the polymerization reactor and the catalyst is formed in situ. The olefin polymerization catalyst is useful in the polymerization of lower α-olefins under polymerization conditions and particularly in the polymerization of straight-chain α-olefins of up to 4 carbon atoms, i.e ethylene, propylene and 1-butene. The procedure of the polymerization process of the invention, by virtue of its use of a catalyst produced from the complex procatalyst precursors of the invention, provides polyolefin product having good properties in quantities which reflect the high activity of the catalyst. The polymerization product can be a homopolymer, e.g. polyethylene or polypropylene, when a single α-olefin monomer is supplied to the reactor. Alternatively, the product can be a copolymer (or terpolymer) such as EPR or polypropylene impact copolymer when two or more monomers are provided to the polymerization reactor.

The polymerization can be conducted as a gas-phase process employing one or more fluidized catalyst beds or can be conducted as a slurry-phase process employing as a diluent an inert material such as propane or a liquified monomer of the polymerization such as propylene. The molecular weight of the polymer product and thus to some extent the properties of the product are influenced by the provisions to the polymerization system of molecular hydrogen as is known in the art. The process can be conducted batch-wise or in a continuous or semi-continuous manner.

The catalyst productivity is often inversely related to selectivity so that highly active catalysts often afford polymer product of low stereoregularity. The catalysts of the invention exhibit good productivity while retaining a desirably high stereospecificity so that polymer is obtained in good quantities with sufficiently good properties that extraction and deashing steps are not required.

The invention will be further illustrated by reference to the following Example. In the Example the productivity of the catalyst (also termed "yield") is determined in kg of polymer product per gram of catalyst in a standard batch process of 1 hour. The stereospecificity of the catalyst and specifically the selectivity to isotactic product is determined by measuring the xylene solubles (XS) in accordance with the regulations of the U.S. Food and Drug Administration. The test for XS comprises dissolving a polymer sample in xylene under reflux in a flask. The flask is then placed in a water bath at 25°C for 1 hour without stirring. The precipitate formed is then removed by filtration and the solubles content is determined by evaporating an aliquot of the filtrate followed by drying and weighing the residue. The xylene solubles consist primarily of amorphous (atactic) polymer and a small amount of low molecular weight polymer. The bulk density of polymer product (B.D.) is determined in gm/cm³.

### Example I

A. Magnesium ethoxide (15g, 131 mmol), 15g (66 mol) of Ti(OC₂H₅)₂ and 33.3g of ethanol were stirred overnight in a 100°C oil bath. Addition of an additional 33.3g of ethanol and 1 hr. heating did not produce a solution. Triethylborate (9.6 g, 66 mol) was added and a solution was obtained with a few minutes heating. The stirred solution was cooled to room temperature and a precipitate formed. This precipitate was recovered by filtration, washed with ethanol and dried under flowing nitrogen. Transparent rhombic crystals, 20.8g, were obtained. Analysis: 5.7% Mg, 10.5% Ti, 0.4% B.
B. Magnesium ethoxide (60g, 524 mmol) and 78.2g (275 mmol) of Ti(O-iC₃H₇)₄ were slurried overnight in the absence of diluent while heated in a 135°C oil bath. The resulting gray slush was slurried with 168g of ethanol and 18.9g (130 mmol) B(OC₂H₅)₃. Upon heating in a 100°C oil bath for 2 hours, a nearly clear solution resulted. After cooling overnight, a precipitate formed which was recovered, washed with ethanol and dried under flowing N₂ to yield 160g of a moist powder.
C. In a 3-litre flask were slurried 188g (1.64 mole) of Mg(OC₂H₅)₂, 312g (1.1 mole) of Ti(O-iC₃H₇)₄, 572g of ethanol and 447g of a 3% solution of Mg(OC₂H₅)₂.1.2B(OC₂H₅)₃ in ethanol (0.55 mole Mg, 0.66 mole B). After stirring overnight at 70°C the solution was cooled to form a precipitate. The precipitate was collected by filtration, rinsed with ethanol and dried briefly under flowing N₂ to produce about 600g of a moist, crystalline solid.
D. Rhombic crystals (37.8g) prepared according to the procedure of Example I.A were slurried into 170g of chlorobenzene and then boiled to a weight of 50g. The resulting solution was clear and stable.
E. An ethanol-moist powder (160g) prepared by the procedure of Example I.B was slurried in about 500g of isooctane and the resulting solution was boiled to a weight of 319g. The resulting slightly cloudy solution was filtered through a medium porosity frit to produce a solution of about 3% magnesium.
F. An ethanol-moist powder (600g) prepared according to Example I.C was slurried in 1800 ml of isooctane. The resulting mixture was distilled at a head temperature of from about 69°C to about 93°C until about 1600 ml of solvent were collected. The slightly cloudy solution was filtered through a medium porosity frit to produce 963g of a clear solution. Analysis: Mg = 1.24 mmol/ml, Ti = 0.835 mmol/ml and B = <0.1 mmol/ml.
G. Procatalysts were produced from the procatalyst precursor solutions of Examples I.D-F by employing a digest at 110°C for 60 minutes in 150 ml of TiCl₄, utilizing sufficient solution to provide 30-50 mmol magnesium. Sufficient diisobutyl phthalate was also present to provide a concentration of about 40 mmol/litre. The resulting solid product was washed at 110°C with 150 ml of a 50/50 by volume mixture of chlorobenzene and TiCl₄ containing 6 mmol/litre of phthaloyl chloride. This was followed by a 30 minute wash at 110°C with the 50/50 mixture. The resulting solid procatalyst was washed twice with isooctane at room temperature and dried under N₂ at 50°C.
   The contacting of the precursor solutions and the first wash solution was accomplished by two methods. In method 1, the diisobutyl phthalate was added to the precursor solution and the mixture was added dropwise to 150 ml of stirred TiCl₄ mixture at room temperature. After 20 minutes, the mixture was heated to 110°C for the remainder of the digest period. Method 2 is similar, except the precursor solution and ED were held overnight at room temperature before being added to the TiCl₄ mixture.
H. Polymerization catalysts were produced from the procatalysts of Example I.G. Triethylaluminum was used as cocatalyst and diisobutyl phthalate as SCA. Using these catalysts, propylene was polymerized in a slurry-phase process in liquid propylene. The results are shown in Table I where "Source" indicates the particular procedure of Example I employed to produce the procatalyst precursor solution and "Method" indicates the method of Example I.G by which the procatalyst was formed. Also shown are results using a catalyst produced from Mg(OC₂H₅)₂ rather than a procatalyst of the invention.

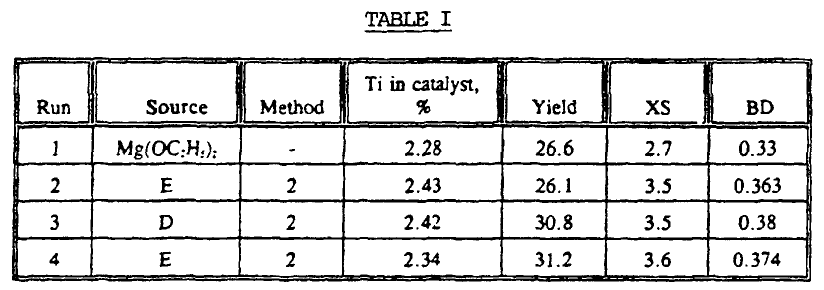

## Claims

1. An olefin polymerization procatalyst precursor which contains moieties of magnesium and titanium and which is obtainable by contacting a magnesium alkoxide, each alkoxide of up to 4 carbon atoms, a titanium alkoxide, each alkoxide of up to 4 carbon atoms, and a trialkylborate in an alkanol at an elevated temperature and removing alkanol from the resulting complex alkoxide compound alcoholate.

2. A precursor according to claim 1 wherein the magnesium alkoxide is magnesium ethoxide.

3. A precursor according to claim 1 or claim 2 wherein the titanium alkoxide is titanium tetraethoxide.

4. A precursor according to any one of claims 1 to 3 wherein the contacting of the magnesium, titanium and boron compounds in an alkanol solution at an elevated temperature takes place at a pressure sufficient to maintain the reaction mixture in a non-gaseous state.

5. A precursor according to any one of claims 1 to 4 wherein the alkanol corresponds to the alkoxide moieties of one or more of the reactants.

6. A precursor according to any one of claims 1 to 5 wherein the reaction temperature is in the range of from 20 to 180°C.

7. A precursor according to any one of claims 1 to 6 wherein the trialkylborate is provided in a quantity of from 0.5 to 2 moles per mole of titanium.

8. A precursor according to any one of claims 1 to 7 wherein the magnesium alkoxide is provided in a quantity of from 0.5 to 4 moles per mole of titanium.

9. A precursor according to any one of claims 1 to 8 which is of the formula
Mg₃Ti₂(OR)₁₄
wherein R is ethyl.

10. A solid olefin polymerization procatalyst obtainable by contacting a procatalyst precursor as claimed in any one of claims 1 to 9 with a halide of tetravalent titanium, an optional halohydrocarbon and an electron donor.

11. A procatalyst according to claim 10 wherein the halide of tetravalent titanium is titanium tetrachloride and the electron donor is an alkyl ester of an aromatic monocarboxylic or dicarboxylic acid.

12. A high activity olefin polymerization catalyst obtainable by contacting a procatalyst as claimed in claim 10 or claim 11 with an organoaluminum compound cocatalyst and a selectivity control agent.

13. A catalyst according to claim 12 wherein the cocatalyst is trialkylaluminum and the selectivity control agent is an alkyl ester of an aromatic monocarboxylic or dicarboxylic acid or an organosilane of the formula
R'_{q}Si(OR)_{4-q}
wherein R' is alkyl or aryl of up to 10 carbon atoms, R is alkyl of up to 4 carbon atoms and q is 1 or 2.

14. A process for polymerizing a lower α-olefin having up to 4 carbon atoms which comprises contacting at least one lower α-olefin having up to 4 carbon atoms under polymerization conditions with a catalyst as claimed in claim 12 or claim 13.

15. A process according to claim 14 wherein the lower α-olefin is propylene.

## Patentansprüche

1. Olefinpolymerisationsprokatalysator-Vorläufer, der Anteile von Magnesium und Titan enthält und der durch Inberührungbringen eines Magnesiumalkoxids, wobei jedes Alkoxid bis zu 4 Kohlenstoffatome aufweist, eines Titanalkoxids, wobei jedes Alkoxid bis zu 4 Kohlenstoffatome aufweist, und eines Trialkylborats in einem Alkanol bei einer erhöhten Temperatur erhältlich ist, und Entfernen des Alkanols von dem resultierenden Alkoholaddukt der komplexen Alkoxidverbindung,

2. Vorläufer nach Anspruch 1, wobei das Magnesiumalkoxid Magnesiumethoxid ist.

3. Vorläufer nach Anspruch 1 oder 2, wobei das Titanalkoxid Titantetraethoxid ist.

4. Vorläufer nach einem der Ansprüche 1 bis 3, wobei das Inberührungbringen der Magnesium-, Titan- und Borverbindungen in einer Alkanollösung bei einer erhöhten Temperatur bei einem Druck stattfindet, der ausreicht, um die Reaktionsmischung in einem nichtgasförmigen Zustand zu halten.

5. Vorläufer nach einem der Ansprüche 1 bis 4, wobei das Alkanol den Alkoxidanteilen eines oder mehrerer der Reaktanten entspricht.

6. Vorläufer nach einem der Ansprüche 1 bis 5, wobei die Reaktionstemperatur im Bereich von 20 bis 180°C liegt.

7. Vorläufer nach einem der Ansprüche 1 bis 6, wobei das Trialkylborat in einer Menge von 0,5 bis 2 mol pro mol Titan bereitgestellt wird.

8. Vorläufer nach einem der Ansprüche 1 bis 7, wobei das Magnesiumalkoxid in einer Menge von 0,5 bis 4 mol pro mol Titan bereitgestellt wird.

9. Vorläufer nach einem der Ansprüche 1 bis 8, der die Formel
Mg₃Ti₂(OR)₁₄
aufweist, worin R gleich Ethyl ist.

10. Fester Olefinpolymerisationsprokatalysator, erhältlich durch Inberührungbringen eines Prokatalysator-Vorläufers wie in einem der Ansprüche 1 bis 9 beansprucht, mit einem Halogenid von tetravalentem Titan, einem optionalen Halogenkohlenwaserstoff und einem Elektronendonor.

11. Prokatalysator nach Anspruch 10, wobei das Halogenid von tetravalentem Titan Titantetrachlorid ist und der Elektronendonor ein Alkylester einer aromatischen Monocarbon- oder Dicarbonsäure ist.

12. Olefinpolymerisationskatalysator hoher Aktivität, erhältlich durch Inberührungbringen eines Prokatalysators wie in Anspruch 10 oder 11 beansprucht mit einem Cokatalysator auf Basis einer Organoaluminiumverbindung und einem Mittel zur Kontrolle der Selektivität.

13. Katalysator nach Anspruch 12, wobei der Cokatalysator Trialkylaluminium ist und das Mittel zur Kontrolle der Selektivität ein Alkylester einer aromatischen Monocarbon- oder Dicarbonsäure oder ein Organosilan der Formel
R'_{q}Si(OR)_{4-q}
ist, worin R' gleich Alkyl oder Aryl mit bis zu 10 Kohlenstoffatomen ist, R gleich Alkyl mit bis zu 4 Kohlenstoffatomen ist und q gleich 1 oder 2 ist.

14. Verfahren zur Polymerisation eines niedrigen α-Olefins mit bis zu 4 Kohlenstoffatomen, das Inberührungbringen mindestens eines niedrigen α-Olefins mit bis zu 4 Kohlenstoffatomen unter Polymerisationsbedingungen mit einem Katalysator wie in Anspruch 12 oder 13 beansprucht umfasst.

15. Verfahren nach Anspruch 14, wobei das niedrige α-Olefin Propylen ist.

## Revendications

1. Précurseur de procatalyseur de polymérisation d'oléfines qui contient des parties magnésium et titane et qui peut être obtenu en mettant en contact un alcoxyde de magnésium, chaque alcoxyde comportant jusqu'à 4 atomes de carbone, un alcoxyde de titane, chaque alcoxyde comportant jusqu'à 4 atomes de carbone, et un borate de trialkyle dans un alcanol à température élevée et en éliminant l'alcanol de l'alcoolate d'alcoxyde complexe résultant.

2. Précurseur selon la revendication 1, dans lequel l'alcoxyde de magnésium est l'éthoxyde de magnésium.

3. Précurseur selon la revendication 1 ou la revendication 2, dans lequel l'alcoxyde de titane est le tétraéthoxyde de titane.

4. Précurseur selon l'une quelconque des revendications 1 à 3, dans lequel la mise en contact des composés du magnésium, du titane et du bore dans une solution dans un alcanol à température élevée a lieu à une pression suffisante pour maintenir le mélange réactionnel dans un état non gazeux.

5. Précurseur selon l'une quelconque des revendications 1 à 4, dans lequel l'alcanol correspond aux parties alcoxydes d'un ou plusieurs des réactifs.

6. Précurseur selon l'une quelconque des revendications 1 à 5, dans lequel la température de réaction se trouve dans la plage de 20 à 180°C.

7. Précurseur selon l'une quelconque des revendications 1 à 6, dans lequel le borate de trialkyle est utilisé en une quantité de 0,5 à 2 moles par mole de titane.

8. Précurseur selon l'une quelconque des revendications 1 à 7, dans lequel l'alcoxyde de magnésium est utilisé en une quantité de 0,5 à 4 moles de titane.

9. Précurseur selon l'une quelconque des revendications 1 à 8, qui a pour formule
Mg₃Ti₂(OR)₁₄
dans laquelle R est un éthyle.

10. Procatalyseur de polymérisation d'oléfines solide pouvant être obtenu en mettant un précurseur de procatalyseur comme revendiqué dans l'une quelconque des revendications 1 à 9, en contact avec un halogénure de titane tétravalent, un halohydrocarbure éventuel et un donneur d'électrons.

11. Procatalyseur selon la revendication 10, dans lequel l'halogénure de titane tétravalent est le tétrachlorure de titane et le donneur d'électrons est un ester alkylique d'un acide monocarboxylique ou dicarboxylique aromatique.

12. Catalyseur de polymérisation d'oléfines de haute activité pouvant être obtenu en mettant un procatalyseur comme revendiqué dans la revendication 10 ou la revendication 11, en contact avec un cocatalyseur composé organoaluminium et un agent de contrôle de sélectivité.

13. Catalyseur selon la revendication 12, dans lequel le cocatalyseur est le trialkylaluminium et l'agent de contrôle de sélectivité est un ester alkylique d'un acide monocarboxylique ou dicarboxylique aromatique ou un organosilane de formule
R'_{q}Si(OR)_{4-q}
dans laquelle R' est un alkyle ou un aryle comportant jusqu'à 10 atomes de carbone, R est un alkyle comportant jusqu'à 4 atomes de carbone et q est 1 ou 2.

14. Procédé pour la polymérisation d'une α-oléfine inférieure comportant jusqu'à 4 atomes de carbone, qui comprend la mise en contact d'au moins une α-oléfine inférieure comportant juqu'à 4 atomes de carbone, dans des conditions de polymérisation, avec un catalyseur comme revendiqué dans la revendication 12 ou la revendication 13.

15. Procédé selon la revendication 14, dans lequel l'α-oléfine inférieure est le propylène.
